# EUROPEAN PATENT SPECIFICATION

(11) **EP 0 628 915 B1**
(45) Date of publication and mention of the grant of the patent: **28.11.2001**
(21) Application number: 94201559.5
(22) Date of filing: 01.06.1994
(51) Int. Cl.: G06F 13/42, H04J 15/00

(54) **A two-lined mixed analog/digital bus system and a master station and a slave station for use in such system**
Ein gemischtes analoges/digitales Bussystem mit zwei Leitungen und eine Master-Station und Slave-Station für den Einsatz in einem solchen System
Un système de bus mixte analogique/digital à deux lignes et une station maître et une station esclave destinées à être utilisées dans un tel système

(30) Priority: 04.06.1993 EP 93201595
(43) Date of publication of application: 14.12.1994
(73) Proprietor: Koninklijke Philips Electronics N.V., 5621 BA Eindhoven (NL)
(72) Inventor: Huijsing, Johan Hendrik, NL-5656 AA Eindhoven (NL); Tuk, Roeland Frans, NL-5656 AA Eindhoven (NL); Riedijk, Frank Robert, NL-5656 AA Eindhoven (NL); Bredius, Martinus, NL-5656 AA Eindhoven (NL); Van Der Horn, Gerrit, NL-5656 AA Eindhoven (NL); Schutte, Herman, NL-5656 AA Eindhoven (NL)
(74) Representative: Peters, Rudolf Johannes

(56) References cited:
- WO-A-87/06740
- ELECTRONIC COMPONENTS AND APPLICATIONS, vol.5, no.4, September 1983, EINDHOVEN, NL pages 214 - 221 MOELANDS 'I2C bus in consumer applications'

## Description

### BACKGROUND TO THE INVENTION

The invention relates to a two-line bus system as set forth in the preamble of Claim 1. Such a system has been described in an article titled "I2C bus in consumer applications" by A.Moelands and published in "Electronic components and applications", Vol 5, No.4, September 1983, Eindhoven NL pages 214-221. The I2C system is also described in European patent application EP 051332 and corresponding US patent US 4,689,740. These references describe the so-called I2C system. The I2C system contains a bus with a clock wire and a data wire, to which a number of stations may be connected. One or more stations may be master stations that can become prevalent master station, if necessary by winning arbitration on the bus. Thereupon, the master station and a slave station communicate clocked binary data via the bus. The I2C bus has been designed predominantly for communicating control signals between integrated circuit chips that are located within a single apparatus such as may be intended for, but not limited to consumer entertainment. I2C has gained status as de facto standard.

The present invention intends to extend the field of use of bus systems that are of comparable structure as, but not necessarily identical to the I2C bus, in particular to such applications where both digital and analog signals occur. One field of application is where a slave station may emit a bit stream that in principle may have an infinite length. A particular example of an analog signal is one wherein a slave station is a smart sensor that when addressed emits a sense signal with an analog amplitude or shape. Analog in this context means multivalued to such extent as the receiver can discriminate, such discrimination being generally equal to the discrimination assigned to a signal by a transmitter, although the granularity applied by the receiver may be coarser.

### SUMMARY TO THE INVENTION

Accordingly, amongst other things it is an object of the present invention to provide a bus system according to the preamble, wherein simple analog signal generators can be accessed in a straightforward manner without the need for providing each such slave station with an analog-to-digital converter that would represent an unbearable financial overhead.

Now, according to one of its aspects, the invention is characterized in that said system supports analog signal transfer in that said prevalent master station has holding means for while eliciting said analog signal from said actual addressed slave station holding said clocking through carrying said clock wire at a predetermined binary value and has receiving means for then receiving said analog signal until changeover of the clock wire to the other binary value. In this way the addressed slave station may directly send its analog value over the bus. Of course, the actual analog value must fit within a range of allowable values in view of the electric voltage withholding capability, the bandwidth, and other electrical bus specifications. A particular advantage of holding the clock during analog signal transfer is the avoiding of electromagnetic interference. In this way, improved adherence to electromagnetic compatibility (E.M.C.) prescriptions is achieved.

The invention also relates to a master station and to a slave station for use in a system according to the invention. Further advantageous aspects of the invention are recited in dependent claims.

### BRIEF DESCRIPTION OF THE DRAWING

These and other aspects and advantages of the invention will be discussed in detail with reference to a preferred embodiment that is shown in and by the appended Figures and in particular:
Figure 1 shows a bus system according to the invention;
Figures 2A, 2B show a message format;
Figure 3 shows station hardware for bus attachment.
Figure 4 shows a smart sensor station;
Figure 5 shows the Manchester encoding format;
Figure 6 shows a synchronous data transfer;
Figure 7 shows an asynchronous data transfer;
Figure 8 shows a PWM coded transfer.

### DETAILED DESCRIPTION OF A PREFERRED EMBODIMENT

For a better insight, first an overall functionality description of the bus system is given. The interface has been simplified as much as possible by putting most of the logic in the bus master station. The bus may have a single master station that defines the clock frequency and may selectively address the slave station or stations. Alternatively, a plurality of master stations may be present, each of which may self-reliantly try to become master of the bus. If there is more than one prospective master, there may be executed an arbitrage operation as based on an address. Usually, this is the master address, although other procedures are feasible; such serial arbitrage may cause a prospective master station with a higher address to relinquish its attempt upon recognizing the first address bit that is non-conforming with an actual bus value. In the latter case, a subsequent retry must be undertaken. Generally, each master station has its own clock generation, although in principle, the externally received clock on the clock wire can be used for synchronization.

The bus master should know what data to expect at a particular address, digital or analog, although in principle, a slave station may produce analog data as well as digital data. The format of the digital data presented by an addressed slave station is unrestricted, thereby allowing transfer of an infinite-length bit stream. An exception is formed by the analog data transfer: in that situation, the master station holds its clocking and keeps the clock line at signal level high, thereby effectively stalling other devices with respect to the bus. A device with ALARM functionality may keep the data line low to interrupt the bus for in this way to request service. In case of actual analog transfer such ALARM functionality necessitates that also the clock is made low. This works as an interrupt, so that the bus master is reactivated for again starting the clock, thereby enabling execution of a service routine. One of various possibilities for executing an interrupt handling procedure is that the interruptor device puts an address, for example, its own address on the bus, in this way causing the master station to gain awareness. Another possibility is that the interrupting device puts a particular code on the data wire for so causing the master to start a search for the interruptor. Generally, the complete data transfer is controlled by a master device, through addressing of a slave station, defining the amount of data, up to infinity, and also to eventually stop the bit stream. For example, if the addressed slave station produces a single byte, the bus is subsequently brought into an idle state. This signals termination of the transport to the master. Another cause for data transfer termination is through interrupt by a third device or through an error condition, such as an accidental stop or idle condition that causes all stations to reset.

From an electrical standpoint, the data wire is pull-down connected through a resistor to the positive voltage terminal. In principle, also the clock wire is pull-down connected; in practice, the clock wire may be hard driven such as through a normal push-pull output instead of through an open collector output stage. Only when alarm signalization during analog data transfer must be supportable, the clock wire may not be hard driven. In particular, the clock edge must be steeper than the data edges. If clock wire and data wire are both open collector lines, the pull-up resistance of the clock line must be appreciably smaller than the pull-up resistance of the data line. Through a small delay connected to the data wire input of the bus interface the clock edge can be made to effectively run a bit ahead of the data edge. It is estimated that a fully functional bus interface needs only 600 transistors, which is fully 40% lower than necessary for I2C interfacing.

Further protocol details are as follows. On idle or stop signalization the interface is automatically reset. Such reset implies that the input address register contains exclusively -ones-, the sel(ected) signalization is made -false-, and the signal Ar (recognize address) may become -false-. Two -idle- signals in succession will activate the address recognizer Ar, meaning that the subsequent data must be processed as an address. If applicable, the address may preceded by more than two -idle- signalizations. The address is headed by a -zero- start bit. a -Nidle- (non-idle) following an -idle- signal will cause resetting, also of signal Ar. Because after resetting the whole address register is filled with logic -ones-, the next -zero- of signalization -sb- operates as start bit, and the remainder of the register will contain the address. After a start bit, the address recognizer is deactivated until reception of the next double -idle- signal. If the address received is correct (i.e. leading to an equality signalization), the output drive routine is activated. If the address received is incorrect, the station in question will wait until a next addressing routine. In all cases the output stage remains active until reception of a -stop- signalization. This cannot occur in combination with an -idle- signalization, because the output stage of the station in question will prevent the data line to remain -1- for a whole clock period. If this would nevertheless occur, then the interface would automatically reset. After the end of a data transfer the interface can reset itself, thereby rendering the bus -idle- again.

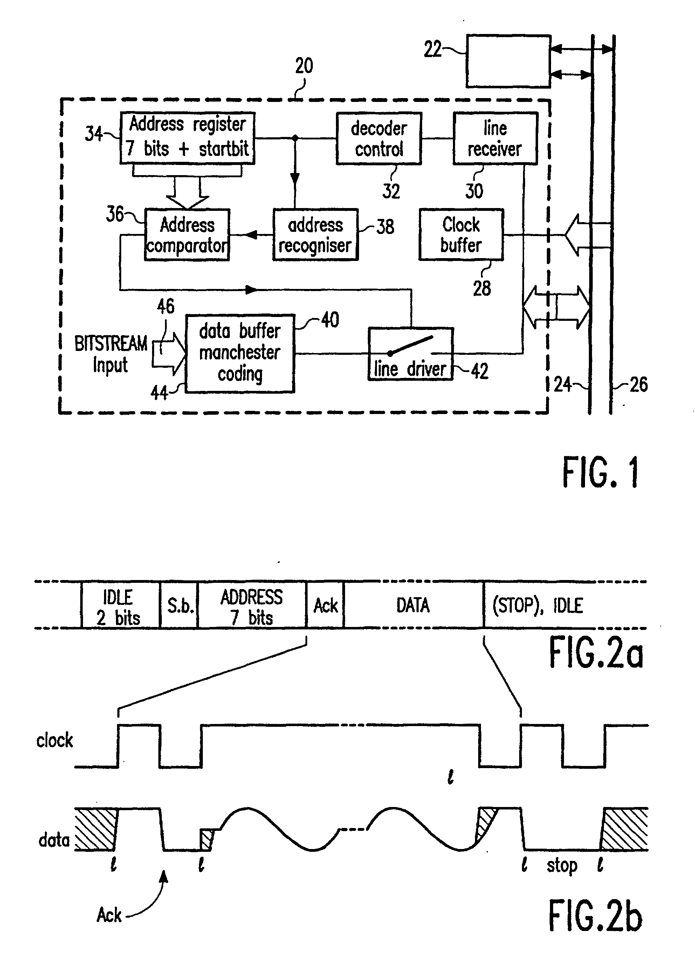

Figure 1 shows a bus system according to the invention, wherein for clarity the number of stations has been limited to only stations 20, 22. In practice, the number of stations may be much higher. Usually, there are four different station categories: master transmitter, master receiver, slave transmitter and slave receiver station. The master controls the transfer operation, such as by synchronizing, addressing, and indicating the transfer direction. The slave is controlled by the master for executing its part of the transmission. The transmitter produces the actual information. The receiver takes up this information. Now, the two-line bus has clock line 26 and data line 24, that in general will be galvanic wires, although interposition of other interconnection technologies such as optical is feasible. In particular, station 20 has been detailed on block diagram level. First, clock buffer 28 receives clock pulses from line 26. The remaining subsystems shown connect directly or indirectly to the data wire. Block 30 is a line receiver that receives the elements of an incoming bit stream from line 24. Block 32 effects decoding of the incoming data bit string and will extract therefrom such control signals as are necessary for controlling the remaining subsystems in Figure 1. Block 38 is an address detector that detects whether the incoming bit stream represents an address information or other information. Block 36 is an address recognizer that recognizes an actual "own" address of the station in question, and if necessary, further addresses such as for example a broadcast address that is common to all stations. The address to be recognized is shifted from blocks 30/32 into register 34 that accommodates seven bits plus a start bit. Upon detection of equality, the address comparator sends an activation signal to switch 42 that may through appropriate features constitute a line driver. The data source is represented by input 46 that leads to data buffer 44. The encoding may be in the well-known Manchester coding. The station as shown may have either slave station functionality or master station functionality, inasmuch as only the bus interface has been shown. If slave, appropriate source mechanism for data generation must be provided, with respect to input 46. Alternatively, the signal produced is analog; this means that either Manchester coding 40 is passed roundabout, or is absent. Line driver 42 may have multiplexing functionality that may be activated by the detection of the clock withholding as detectable by element 28. If master, clock generation and data/address/control generation for data line 24 may be provided, such as in the general manner that is known from the I2C reference. If receiver, information destination functionality may follow I2C technology as well. It is known that transmitter/receiver functionality may by itself interchange during one dialogue. For simplicity, station 22 has not been detailed further.

Figures 2A, 2B show a message format according to the invention. First, the bit format has not been specified here but will be discussed later on. Figure 2A shows the message format for an all-digital transfer. The message starts with a two-bit - idle- signalization. Next, a single start bit S.b. is presented. Next, a seven bit address is presented. Next, a time space is produced for reception of a slave-generated - acknowledge- signalization. Next a data interval is shown. Finally a time space for signalling -idle-, and if applicable, -stop-, has been indicated. Figure 2B shows an extension of Figure 2A for use with analog data transfer. Here, the digital bit cell may be dimensioned according to the I2C protocol, which is not further discussed for brevity. Now, the left part of the data trace relates to the transmission of the digital address data. Next, the slave station may transmit an acknowledgement signalization within the first half of a full clock pulse period, -1- indicating the leading edge. After a full clock period, the clock again rises and stays at the higher level so attained. This releases the data wire for the transport of analog data that has been shown as a meandering trace. The meaning of the data may be arbitrary, inasmuch as it may be a DC voltage, a periodical phenomenon, or an arbitrary wave, such as for example, telephone speech or some other sensor-generated transient. Finally, when the clock wire goes down again, the next rising clock pulse edge signals termination of the analog intermezzo, the interval between two contiguous rising clock pulse edges indicating a stop signalization, in accordance with the traces of Figure 2A.

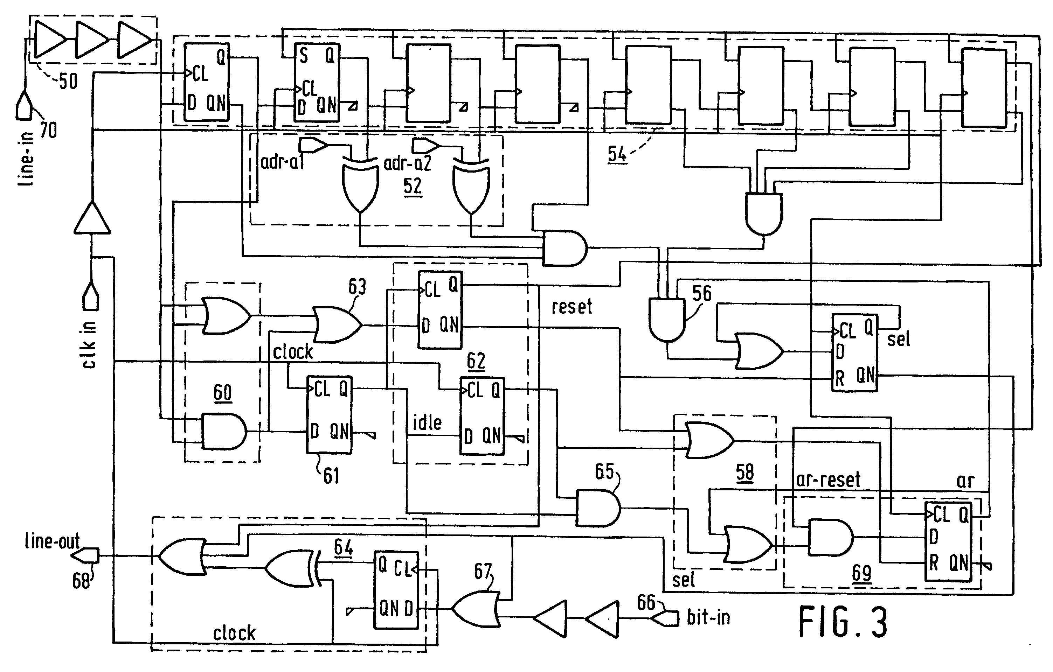

Figure 3 shows station hardware for bus attachment. Generally, all hardware are standard circuit elements. Numeral 66 indicates the data input, that is connected to a user device associated to the station in question, but which has not been shown for brevity. The data is shown being briefly delayed by buffers and transmission to the bus can be blocked by an OR-gate 67. Next, a D-flipflop and an EXOR-gate at 64 provide Manchester encoding that is well known to persons skilled in the art of data transmission. A further OR-gate allows superposing of signals to the data wire output at numeral 68. Primary station clock is at the clock input of 64's flipflop. Numeral 68 is connected to the control electrode of a transistor, not shown, that has one main electrode connected to ground and the other main electrode driving the data wire, which as discussed supra is resistor pulled-up. The data wire input is at numeral 70, with three buffers at 50 providing adequate delay as explained supra. The data feed an eight bit shift register 54, of which the second and third bit stages feed an address comparator 52 that consists of EXOR-gates. The other inputs of these gates are fed by adjustable but stationary address bits. In this particular case, first and fourth bits of the shift registers feed an AND-gate, as well as fifth to eighth bits. The latter two AND-gats are in turn ANDed in the remainder of the address comparator at 56. Via an OR-gate the recognition is stored as signal -sel- in a retrocoupled data flipflop until resetting thereof.

The station, once selected (sel), unblocks the output OR-gate at 64, provided that the third input of this OR-gate is low. At 60, an OR-gate and an AND-gate constitute a decoder. The AND-gate detects two successive 1-bits received and sets flipflop 61, signalling -idle. Both AND-gate and OR-gate, via an OR-gate at 63, set a flipflop at 62 that in its turn resets the whole input shift register. The flipflop at 61 sets a second flipflop at 62, the latter two being ANDed at 65. At 58 the final address recognition is effected. The -idle- signal and the start bit are ANDed in 69 for setting the ar flipflop at 69 which subsequently is kept set through a feedback. Resetting on the other hand, is through the reset signal from the upper flipflop at 62. The arrangement of Figure 3 thus allows for address recognition and data outputting. It represents thus a slave that has digital output. For analog output, line 68 is fed by a multiplexer that is controlled as briefly discussed with reference to Figure 1. For operating as master, the data output may have again the master functionality known from I2C technology. For slave receiver, again the functionality of I2C as referenced may imported into this arrangement.

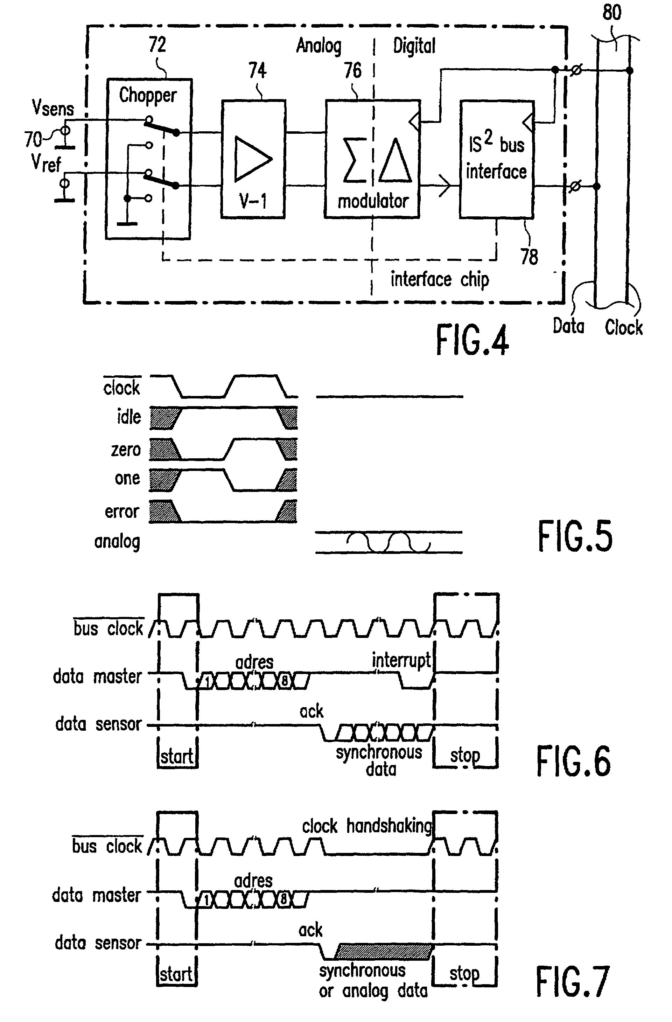

Figure 4 is an elementary block diagram of a smart sensor station. The sensor by way of example is a thermopile for sensing the temperature, incorporating a Sigma-Delta AD convertor. The bus distributes a central clock for all devices or stations. In this way no synchronization problems remain and separate clocks are superfluous. With Manchester coding, the four different signals in a clock period allow for handshaking and simple error checks. The Manchester coding block contains a one-bit-buffer to insert the acknowledge bit. When the data line is pulled down in a stop condition or becomes idle the interface resets itself.

As regards the thermopile proper, first the sensing signal 70 is time-chopped in a way known for this type of small signals at 72. Next, a V-I differential amplifier 74 is provided. A known sigma-delta modulator 76 converts the signal into a digital bit stream, the bit sequence and distance representing the actual signal values. IS² bus interface 78 allows to put this bit stream on the data wire of the two wire IS² bus 80. In this realization, the output of the station is a bit string of à priori unlimited length. In another realization, the bus data emanated from the slave is full analog. Still another one would be mixed, needing some multiplexed output feature that for brevity has not been detailed to the gate level.

Two thermopiles are useful to achieve relative temperature measuring. To obtain higher performance the configuration is balanced. Accuracy of 14 bit was reached. The input offset is reduced to 5 *µ*V with the input chopper. The processor can subtract the offset from the measurement. This is realized by using the LSB of the address to control the chopper. The bus interface supports a 100 kHz clock. The pull-up resistor on the data line is 3.3 kHz, total capacitance is always lower than 330 pF.

Figure 5 shows the Manchester encoding format confronted with the inverted (as shown by superstrike) clock signal. Two data values and two control signals -idle- and -error- are shown. Also an analog signal is shown. Various useful applications of these two control signals are obvious from the foregoing.

Figure 6 summarily shows the synchronous data transfer protocol, again confronted with the inverted clock. In this realization, the exact prescriptions of the I²C protocol have been used as far as applicable. In particular, the start condition as imposed by the master station, the addressing by the master and the data output by the slave are shown. At far right, an interrupt on the data line stops the transmitting slave.

Likewise, Figure 7 summarily shows the asynchronous data transfer protocol, again confronted with the inverted clock. Notably during asynchronous or analog data, the clock handshaking signal is high, and the inverted clock signal is low, in consequence. The primary difference with Figure 6 is the holding of the clock signal during slave transmission and the terminating of this transmission upon restarting of the clock pulse train.

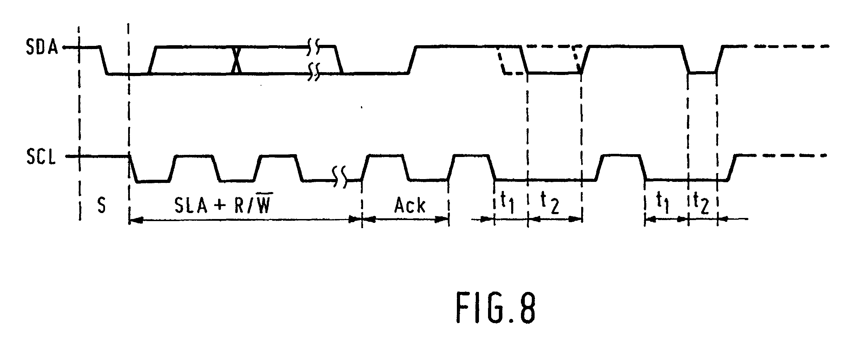

Figure 8 shows a PWM (Pulse Width Modulated) transfer, for coding analog values. The prime advantage thereof is better adaptation to presently standardized I2C protocol. In the Figure, the upper trace shows the signal on the data line SDA. The lower trace shows the signal on the clock line SCL. At left, first the start condition and the slave addressing cum read/write control of the slave are shown, and also an acknowledge interval. Next, a sequence of slave-defined analog signals are shown, during stretched clock intervals as defined by the transmitting, that may be the slave as well as the master in the preceding interval. By itself, the length of the latter intervals is determined by appropriate data rate and time granularity of the information. The analog value may be defined, for example as t1/(t1 +t2) giving a ratio from about 0,01 to about 0,99. Other definitions of the value may be determined by the envisaged application. For each stretched clock pulse on SCL a new or repeated value may be transmitted. Repetition, such as 8 times during one byte would be useful for CAT (Computer Averaged Transient) applications. In case of discrete (but analog) transmissions the latter format is less sensitive against interferences.

## Claims

1. A two-line multi-station bus system with a clock wire (26) and a data wire (24), said system supporting selective slave station (20) addressing by a prevalent master station (22) for thereupon eliciting a bitwise clocked data transfer between said clocking master station and an addressed and clocked slave station, **characterized in that** said system supports analog signal transfer **in that** said prevalent master station (22) has holding means for while eliciting said analog signal from said actual addressed slave station (20) holding said clocking through carrying said clock wire (26) at a predetermined binary value and has receiving means for then receiving said analog signal until changeover of the clock wire (26) to the other binary value.

2. A bus system according to Claim 1, wherein said holding is effected through pullup of said clock wire (26) at a predetermined binary value, the receiving means receiving said analog signal in the form of a pulse width modulated signal on said data wire as delimited by an associated signal on said clock wire until terminating said eliciting through termination of said pullup.

3. A system as claimed in Claim 2, wherein said system further supports analog signal transfer from said master station (22) to said slave station in that said master station has delimiting means for while transmitting a pulse width modulated signal on said data wire transmitting an associated delimiting signal on said clock wire.

4. A system as claimed in Claim 1, 2 or 3, wherein said master station (22) has receiving means for allowing receiving an unlimited length bit stream from said slave station (20).

5. A system as claimed in Claim 1, 2 or 3, being a multi-master system and having arbitration means for upon collision of multiple prospective bus master stations executing an address based arbitration thereamong for subsequently producing an exclusive actual master station.

6. A master station for use in a two-line multi-station bus system and having a clock wire attachment and a data wire attachment and selective slave station addressing means for through clocking eliciting a bitwise clocked data transfer between said master station and a slave station, **characterized in that** said master station supports analog signal transfer **in that** it has holding means for while eliciting an analog signal from an actual addressed slave station holding said clocking through carrying said clock wire (26) at a predetermined binary value and has receiving means for then receiving said analog value until changeover of the clock wire (26) to the other binary value.

7. A master station according to Claim 6, the master station effecting said holding through pullup of said clock wire (26) at a predetermined binary value, the receiving means receiving said analog signal in the form of a pulse width modulated signal on said data wire (24) as delimited by an associated signal on said clock wire.

8. A master station as claimed in Claim 7, **characterized in that** it has delimiting means for while transmitting a pulse width modulated signal on said data wire (24) also transmitting an associated delimiting signal on said clock wire (26).

9. A slave station for use in a two-line multi-station bus system and having a clock wire attachment and a data wire attachment and selective slave station address detector means for when addressed producing a bitwise clocked data stream on said data wire attachment, **characterized in that** said slave station supports analog signal transfer **in that** it has clock holding detector means for detecting a clock hold condition on said clock wire (26) through pullup of said clock wire (26) to a particular binary value and **in that** the slave station has transmitting means for upon said detecting of the clock hold condition transmitting an analog signal on said data wire attachment slave station until changeover of the clock wire (26) to the other binary value.

10. A station as claimed in any of Claims 6 to 9, **characterized in that** it has interface reset means for upon receiving an idle or stop signalization on its data wire attachment resetting its interface.

11. A station as claimed in any of Claims 6 to 10, **characterized in that** it has activation means for upon reception of two successive idle signalizations on its data wire attachment activating its address recognizer means.

12. A station as claimed in any of Claims 6 to 11, **characterized in that** its interface reset means upon receiving an idle followed by a non-idle signalization on its data wire attachment resetting its interface inclusive of its address recognition signal.

## Patentansprüche

1. Zwei-Leitungs-Mehrstationen-Bussystem mit einer Taktleitung (26) und einer Datenleitung (24), wobei das genannte System die selektive Adressierung der Slave-Station (20) durch eine vorherrschende Master-Station (22) unterstützt, um daraufhin eine bitweise getaktete Datenübertragung zwischen der genannten getakteten Master-Station und einer adressierten und getakteten Slave-Station auszulösen, **dadurch gekennzeichnet, dass** das System den analogen Signaltransfer dahingehend unterstützt, dass die genannte vorherrschende Master-Station (22) über Haltemittel verfügt, um beim Auslösen des genannten analogen Signals aus der genannten gerade adressierten Slave-Station (20) das genannte Takten festzuhalten, indem die genannte Taktleitung (26) auf einen vorgegebenen binären Wert gebracht wird, und über Empfangsmittel, um dann das genannte analoge Signal zu empfangen, bis die Taktleitung (26) auf den anderen binären Wert wechselt.

2. Bussystem nach Anspruch 1, wobei das genannte Festhalten dadurch erfolgt, dass die genannte Taktleitung (26) auf einen vorgegebenen binären Wert hochgezogen wird, wobei die Empfangsmittel das genannte analoge Signal in Form eines pulsbreitenmodulierten Signals auf der genannten Datenleitung empfangen, das durch ein zugehöriges Signal auf der genannten Taktleitung begrenzt wird, bis das genannte Auslösen durch Beendigung des genannten Hochziehens (pullup) beendet wird.

3. System nach Anspruch 2, wobei das genannte System außerdem die analoge Signalübertragung von der genannten Master-Station (22) an die genannte Slave-Station dahingehend unterstützt, dass die genannte Master-Station über Begrenzungsmittel verfügt, um während der Übertragung eines pulsbreitenmodulierten Signals auf der genannten Datenleitung ein zugehöriges Begrenzungssignal auf der genannten Taktleitung zu übertragen.

4. System nach Anspruch 1, 2 oder 3, wobei die genannte Master-Station (22) über Empfangsmittel verfügt, um einen Bitstrom von unbegrenzter Länge von der genannten Slave-Station (20) empfangen zu können.

5. System nach Anspruch 1, 2 oder 3, wobei es sich um ein System mit mehreren Master-Stationen handelt, das über Konkurrenzbereinigungsmittel verfügt, um bei einer Kollision mehrerer potentieller Master-Stationen des Busses eine Konkurrenzbereinigung auf Adressbasis durchzuführen, aus der anschließend eine ausschließliche tatsächliche Master-Station hervorgeht.

6. Master-Station zur Verwendung in einem Zwei-Leitungs-Mehrstationen-Bussystem und mit einer Taktleitungs-Anbindung und einer Datenleitungs-Anbindung und selektiven Slave-Stations-Adressiermitteln, um durch entsprechendes Takten eine bitweise getaktete Datenübertragung zwischen der genannten Master-Station und einer Slave-Station auszulösen, **dadurch gekennzeichnet, dass** die genannte Master-Station die analoge Signalübertragung dahingehend unterstützt, dass sie über Haltemittel verfügt, um beim Auslösen eines analogen Signals aus einer gerade adressierten Slave-Station das genannte Takten festzuhalten, indem die genannte Taktleitung (26) auf einen vorgegebenen binären Wert gebracht wird, und über Empfangsmittel, um dann den genannten analogen Wert zu empfangen, bis die Taktleitung (26) auf den anderen binären Wert wechselt.

7. Master-Station nach Anspruch 6, wobei die Master-Station das genannte Halten bewerkstelligt, indem sie die genannte Taktleitung (26) auf einen vorgegebenen binären Wert hochzieht, wobei die Empfangsmittel das genannte analoge Signal in Form eines pulsbreitenmodulierten Signals auf der genannten Datenleitung (24) empfangen, das durch ein zugehöriges Signal auf der genannten Taktleitung begrenzt wird.

8. Master-Station nach Anspruch 7, **dadurch gekennzeichnet, dass** sie über Begrenzungsmittel verfügt, um während der Übertragung eines pulsbreitenmodulierten Signals auf der genannten Datenleitung (24) auch ein zugehöriges Begrenzungssignal auf der genannten Taktleitung (26) zu übertragen.

9. Slave-Station zur Verwendung in einem Zwei-Leitungs-Mehrstationen-Bussystem und mit einer Taktleitungs-Anbindung und einer Datenleitungs-Anbindung und selektiven Slave-Station-Adressendetektormitteln, um bei Adressierung einen bitweise getakteten Datenstrom auf der genannten Datenleitungs-Anbindung zu erzeugen, **dadurch gekennzeichnet, dass** die genannten Slave-Station die analoge Signalübertragung dahingehend unterstützt, dass sie über Takthalte-Detektormittel verfügt, um eine Takthalte-Bedingung auf der genannten Taktleitung (26) durch Hochziehen der genannten Taktleitung (26) auf einen bestimmten binären Wert zu erkennen, und dadurch, dass die Slave-Station über Sendemittel verfügt, um bei dem genannten Erkennen der Takthalte-Bedingung ein analoges Signal auf der genannten Datenleitungs-Anbindung zu übertragen, bis die Taktleitung (26) auf den anderen binären Wert wechselt.

10. Station nach einem der Ansprüche 6 bis 9, **dadurch gekennzeichnet, dass** sie über Schnittstellen-Rückstellmittel verfügt, um bei Empfang einer ,Leerlauf'- oder ,Stopp'- Signalisierung auf ihrer Datenleitungs-Anbindung ihre Schnittstelle rückzustellen.

11. Station nach einem der Ansprüche 6 bis 10, **dadurch gekennzeichnet, dass** sie über Aktivierungsmittel verfügt, um bei Empfang von zwei aufeinanderfolgenden ,Leerlauf'-Signalisierungen auf ihrer Datenleitungs-Anbindung ihre Adressenerkennungsmittel zu aktivieren.

12. Station nach einem der Ansprüche 6 bis 11, **dadurch gekennzeichnet, dass** ihre Schnittstellen-Rückstellmittel bei Empfang einer ,Leerlauf'-Signalisierung gefolgt von einer ,Nicht-Leerlauf'-Signalisierung auf ihrer Datenleitungs-Anbindung ihre Schnittstelle inklusive ihres Adressenerkennungssignals rücksetzt.

## Revendications

1. Système de bus à plusieurs stations à deux lignes comportant un fil d'horloge (26) et un fil de données (24), ledit système supportant un adressage de station asservie (20) sélectif par une station maîtresse (22) actuelle pour, à ce moment, obtenir un transfert de données cadencé bit par bit entre ladite station maîtresse de cadencement et une station asservie cadencée et adressée, **caractérisé en ce que** ledit système supporte un transfert de signaux analogiques, **en ce que** ladite station maîtresse (22) actuelle comprend des moyens de maintien pour, tout en obtenant ledit signal analogique de ladite station asservie (20) adressée actuelle maintenir ledit cadencement en portant ledit fil d'horloge (26) à une valeur binaire prédéterminée et comprend des moyens de réception pour ensuite recevoir ledit signal analogique jusqu'à basculement du fil d'horloge (26) à l'autre valeur binaire.

2. Système de bus suivant la revendication 1, dans lequel ledit maintien est effectué par polarisation haute dudit fil d'horloge (26) à une valeur binaire prédéterminée, les moyens de réception recevant ledit signal analogique sous la forme d'un signal modulé en largeur d'impulsion sur ledit fil de données tel que délimité par un signal associé sur ledit fil d'horloge jusqu'au terme de ladite obtention à la fin de ladite polarisation haute.

3. Système suivant la revendication 2, dans lequel ledit système supporte en outre un transfert de signaux analogiques de ladite station maîtresse (22) à ladite station asservie, en ce que ladite station maîtresse comprend des moyens de délimitation pour, tout en transmettant un signal modulé en largeur d'impulsion sur ledit fil de données, transmettre un signal de délimitation associé sur ledit fil d'horloge.

4. Système suivant la revendication 1, 2 ou 3, dans lequel ladite station maîtresse (22) comprend des moyens de réception pour permettre la réception d'un train de bits de longueur illimitée en provenance de ladite station asservie (20).

5. Système suivant la revendication 1, 2 ou 3, étant un système à plusieurs maîtres et comportant des moyens d'arbitrage pour, lors de la collision de plusieurs stations maîtresses de bus potentielles, exécuter un arbitrage sur la base d'une adresse entre celles-ci pour ensuite produire une station maîtresse actuelle exclusive.

6. Station maîtresse à utiliser dans un système de bus à plusieurs stations à deux lignes et comportant une connexion de fil d'horloge et une connexion de fil de données et des moyens d'adressage de station asservie sélectif pour, par un cadencement, obtenir un transfert de données cadencées bit par bit entre ladite station maîtresse et une station asservie, **caractérisée en ce que** ladite station maîtresse supporte un transfert de signaux analogiques, **en ce qu'**elle comprend des moyens de maintien pour, tout en obtenant un signal analogique d'une station asservie adressée actuelle, maintenir ledit cadencement en portant ledit fil d'horloge (26) à une valeur binaire prédéterminée et comprend des moyens de réception pour ensuite recevoir ladite valeur analogique jusqu'à basculement du fil d'horloge (26) à l'autre valeur binaire.

7. Station maîtresse suivant la revendication 6, la station maîtresse effectuant ledit maintien par polarisation haute dudit fil d'horloge (26) à une valeur binaire prédéterminée, les moyens de réception recevant ledit signal analogique sous la forme d'un signal modulé en largeur d'impulsion sur ledit fil de données (24) tel que délimité par un signal associé sur ledit fil d'horloge.

8. Station maîtresse suivant la revendication 7, **caractérisée en ce qu'**elle comprend des moyens de délimitation pour, tout en transmettant un signal modulé en largeur d'impulsion sur ledit fil de données (24), transmettre également un signal de délimitation associé sur ledit fil d'horloge (26).

9. Station asservie à utiliser dans un système de bus à plusieurs stations à deux lignes et comportant une connexion de fil d'horloge et une connexion de fil de données et des moyens de détection d'adresse de station asservie sélective pour, lorsqu'elle est adressée, produire un train de données cadencé bit par bit sur ladite connexion de fil de données, **caractérisée en ce que** ladite station asservie supporte un transfert de signaux analogiques, **en ce qu'**elle comprend des moyens de détection de maintien de cadence pour détecter une situation de maintien de cadence sur ledit fil d'horloge (26) par polarisation haute dudit fil d'horloge (26) à une valeur binaire particulière et **en ce que** la station asservie comprend des moyens d'émission pour, lors de ladite détection de l'état de maintien de cadence, transmettre un signal analogique sur ladite station asservie de connexion de fil de données jusqu'à basculement du fil d'horloge (26) à l'autre valeur binaire.

10. Station suivant l'une quelconque des revendications 6 à 9, **caractérisée en ce qu'**elle comprend des moyens de remise à zéro d'interface pour, lors de la réception d'une signalisation d'inactivité ou d'arrêt sur sa connexion de fil de données, remettre son interface à zéro.

11. Station suivant l'une quelconque des revendications 6 à 10, **caractérisée en ce qu'**elle comprend des moyens d'activation pour, lors de la réception de deux signalisations d'inactivité successives sur sa connexion de fil de données, activer ses moyens de reconnaissance d'adresse.

12. Station suivant l'une quelconque des revendications 6 à 11, **caractérisée en ce que** ses moyens de remise à zéro d'interface lors de la réception d'une signalisation d'inactivité suivie d'une signalisation de non-inactivité sur sa connexion de fil de données remettent à zéro son interface en incluant son signal de reconnaissance d'adresse.
